# EUROPEAN PATENT APPLICATION

(11) **EP 4 760 243 A1**
(43) Date of publication of application: **17.06.2026**
(21) Application number: 25214862.2
(22) Date of filing: 11.11.2025
(51) Int. Cl.: G01N 23/046, G21K 1/10

(54) **METHOD AND SCANNING APPARATUS FOR SCANNING A COMPONENT**

(30) Priority: 10.12.2024 GB 202418041
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method (200) for scanning a component (102) includes providing a filter (104) and the component, the filter at least partially surrounding the component. The filter comprises a multi-phase material (140) that has an attenuation coefficient (C1) that is lower than an attenuation coefficient (C2) of a material of the component (102) to be scanned. The method further includes disposing the component and the filter on a support platform (120), and providing an imaging beam source (108) and an imaging beam receiver (114). The support platform (120) is configured to rotate and/or revolve relative to the imaging beam source (108) and the imaging beam receiver (114) about one or more axes. The method includes generating, via the imaging beam source (108), an imaging beam (110) that passes through the component and the filter. The method includes attenuating, via the, a scatter beam (111) that is produced upon irradiation of the component (102) with the imaging beam (110).

## Description

### FIELD

This invention relates to a method for scanning a component, and to a combination of a scanning apparatus for scanning a component and a filter at least partially surrounding the component.

### BACKGROUND

Computed tomography (CT) scanning is an imaging technique used to obtain detailed images of a component. In particular, CT may be used to produce three-dimensional (3D) representations of a component. This may be useful for performing detailed internal inspection of the component, which may be a component of a turbomachine, such as a gas turbine engine. CT scanning may use X-rays and gamma rays to produce an image of the component. To produce a 3D model, 2D images of the component are taken from multiple angles and the images are computationally combined. 3D CT is an emerging technology for the inspection of dense metal parts such as those produced by additive manufacturing that can have non-line of sight surfaces and cannot be inspected by other methods.

An x-ray source produces polychromatic (or monochromatic if the source is capable of doing so) x-rays that penetrate a part and form an x-ray image on a detector. The objects are (usually) rotated through 360 degrees (although partial angle and 180-degree scans do exist) while being imaged multiple times. The x-ray images are combined via a process called reconstruction to produce a 3D representation of the objects. Surface determination is then performed to separate the object's volumes from the background. Subsequently, cross sections of the objects may be viewed by the user.

During scanning, part of the x-rays is attenuated by a material of the component, some are scattered, and the remaining are transmitted through the component to fall on the detector. 2D x-ray images are significantly affected by scatter. Particularly, x-ray images are most affected by incoherent Compton scattering which is a major source of stray radiation. Original equipment manufacturers (OEMs) have therefore developed technologies, e.g. hardware and software, to correct scatter and thereby reduce errors. 2D CT is another form of CT where the detector is a linear detector rather than a 2D detector. 2D CT can only create a thin cross-section image of the part compared to 3D CT which generated the full volumetric data. However, 2D CT has the advantage of being less affected by scatter. This enables multiple parts to be scanned simultaneously. However, for 3D CT scans, multiple hard and dense objects can significantly increase scatter and therefore degrade scan quality. Therefore, there is a need for an effective solution to reduce scatter during the 3D CT scanning process.

### SUMMARY

According to a first aspect, a method for scanning a component is provided. The method includes providing a filter and the component, such that the filter at least partially surrounds the component. The filter comprises a multi-phase material that has an attenuation coefficient that is lower than an attenuation coefficient of a material of the component to be scanned. The method further includes disposing the component and the filter on a support platform. The method further includes providing an imaging beam source and an imaging beam receiver, such that the component and the filter are placed between the imaging beam source and the imaging beam receiver. The support platform is configured to rotate and/or revolve relative to the imaging beam source and the imaging beam receiver about one or more axes and/or configured to translate relative to the imaging beam source and the imaging beam receiver. The method further includes generating, via the imaging beam source, an imaging beam that passes through the component and the filter. The method further includes attenuating, via the filter, a scatter beam that is produced upon irradiation of the component with the imaging beam. The method further includes receiving the imaging beam at the imaging beam receiver. The method further includes generating, via the imaging beam receiver, an image in response to receiving the imaging beam.

By surrounding the component by the filter that has the lower attenuation coefficient than that of the component, the method of the present invention may facilitate reduction of the scatter that is usually caused by the material of the component. By reducing the scatter in the image, the method of the present invention may enable accurate scanning and clear surface detection of the component. Further, the low attenuation filter may cause a cumulative x-ray attenuation lower than that of the attenuation caused by the component but higher than the attenuation in a region prone to scatter. Hence, the method of the present invention may facilitate a clear identification and separation of the component in the image. Moreover, the method of the present invention may further provide improved image quality and inspection accuracy while simplifying scanning process.

Furthermore, by surrounding the component by the filter that has the lower attenuation coefficient than that of the component, softer rays (e.g., x-rays) in the imaging beam incoherent scattering may be attenuated by the filter while the harder rays may be transmitted through the component and are less-likely to be attenuated by the filter, thus reducing the effect of scatter on the imaging projection and quality of the image. The imaging beam attenuation achieved by the filter is of an intermediate level rather than being too low or too high or being comparable to that of the component.

The method of the present invention is focused on reducing scatter by surrounding the component by the filter that has a lower density than that of the component. On the contrary, other possible arrangements such as using a complementary geometry or multiple parts of similar density may not be practically feasible for large and dense components as the overall size of this arrangement may exceed a scanner's size restriction. Another possible arrangement such as using a higher density complementary geometry may also cause the scatter from the same to degrade the contrast resolution of the object (component) of interest. Hence, the method of the present invention is advantageous in way that the arrangement of the component and the filter disclosed by this method differs from other possible arrangements so as to reduce the impact of scatter in the image.

The material of the filter is a multi-phase material. The multi-phase material may be flowable which enables the filter to reach intricate and irregular shapes and cavities of the component, thereby ensuring precise placement of the filter over the component. This may further improve surface detection and identification of the component in the image.

In some embodiments, the multi-phase material is a particle suspension, a colloidal suspension, a polymer suspension, or a composite silicone putty. The multi-phase material may be a liquid or a gas. Specifically, as the filter in the present invention need not offer any mechanical support to the component, the filter can be a fluid. In some examples, the multi-phase material may be mercury or alloys such as Galinstan or solutions, emulsions etc.

In some embodiments, the filter completely surrounds the component. By completely surrounding the component by the filter, the scatter may be completely eliminated, which enables more accurate surface and edge detection of the component. In presence of the filter completely surrounding the component, a clear contrast between the component (or an edge of the component) and the filter may be achieved in the image, which may facilitate a clear identification and separation of the component in the image. On the other hand, in absence of any filter surrounding the component, there would be a smooth contrast variation between the component and the filter.

In some embodiments, the filter is positioned adjacent to the component. In applications where only surface detection is required only on one side of the component, the filter may be positioned adjacent to that side of the component. In such applications, it is to be noted that a density of the filter is known to a skilled person in this art (i.e., less than the component). Therefore, the known density of the filter may help to identify and distinguish the component (or an edge of the component) from the filter based on the contrast provided by the filter. The known density of the filter may also improve effectiveness of the method of the present invention.

In some embodiments, disposing the component and the filter on the support platform further includes positioning the component and the filter on the support platform in a configuration that reduces variation in material thickness penetrated at multiple positions or angles of movement of the support platform relative to the imaging beam source and the imaging beam receiver.

This configuration may result in a high scan quality as the variation in combined material thickness to be penetrated is reduced for multiple projections. By introducing the filter, the variation in material path length may be reduced for multiple relative angles of rotation of the support platform. Accordingly, the variation in imaging beam attenuation across the filter and component may be reduced, leading to improved image contrast and quality. Moreover, averaging out the material thickness of the component by placing the component adjacent to the filter, may reduce artifacts that may be otherwise caused by concave wall effect.

In some embodiments, disposing the component and the filter on the support platform further includes positioning the component and the filter on the support platform in a configuration such that facing surfaces of the component and the filter are equally spaced across their full extent.

With facing surfaces of the component and the filter equally or substantially equally spaced across their full extent, image quality of the component may be improved. For example, the component and the filter are disposed on the support platform such that if the component and the filter were to be interconnected, there would be no air gap at any point between the surfaces of the component and the filter, or a minimal air gap. In other words, the component and the filter may be disposed so that their surfaces are in direct contact, or they may be separated by a border region, made from, for example, a polymer film.

In some embodiments, a resultant combined cross section of the filter and the component is circular or nearly circular or forms an annulus or near annulus.

In some embodiments, the filter is a protective film or a sleeve.

In some embodiments, the filter is positioned on the support platform offset from the one or more axes of rotation and/or revolution, preferably wherein no part to be scanned of the filter or no part to be scanned of the component intersects the one or more axes of rotation and/or revolution.

In some embodiments, attenuating the scatter beam further includes increasing the rejection of scattered rays before receiving the scatter beam at the imaging beam receiver.

In some embodiments, the imaging beam source is an electromagnetic source, such as an x-ray source or a gamma-ray source. The imaging beam source is capable of emitting the imaging beam in the electromagnetic spectrum that can penetrate or be transmitted through a material after attenuation.

In some embodiments, the imaging beam source is a reflective x-ray source or a transmissive x-ray source. The reflective x-ray source uses a thick target (anode) and the electron energy is sufficiently low whereas the transmissive x-ray source uses a thin target (anode) and the electron energy is relatively high.

In some embodiments, the component is a turbine blade or a compressor blade of a gas turbine engine. In other embodiments, the component may be some other component of the gas turbine engine. In other embodiments, the component may be a component of a prime mover.

According to a second aspect, a combination of a scanning apparatus for scanning a component and a filter at least partially surrounding the component is provided. A material of the filter is a multi-phase material that has an attenuation coefficient that is lower than an attenuation coefficient of a material of the component to be scanned. The scanning apparatus includes an imaging beam source configured to generate an imaging beam that passes through the component and the filter. The filter is configured to attenuate a scatter beam that is produced upon irradiation of the component with the imaging beam. The scanning apparatus further includes an imaging beam receiver configured to receive the imaging beam, such that the component and the filter are disposed between the imaging beam source and the imaging beam receiver. The imaging beam receiver is configured to generate an image in response to receiving the imaging beam. The scanning apparatus further includes a support platform configured to support the component and the filter. The support platform is configured to rotate and/or revolve relative to the imaging beam source and the imaging beam receiver about one or more axes and/or configured to translate relative to the imaging beam source and the imaging beam receiver to allow generation of the image.

By surrounding the component by the filter that has the lower attenuation coefficient than that of the component, the scanning apparatus may facilitate reduction of the scatter that is usually caused by the material of the component. By reducing the scatter in the image, the scanning apparatus may enable accurate scanning and clear surface detection of the component. Further, the low attenuation filter may cause a cumulative x-ray attenuation lower than that of the attenuation caused by the component but higher than the attenuation in a region prone to scatter. Hence, the scanning apparatus may facilitate a clear identification and separation of the component in the image. Moreover, the scanning apparatus may further provide improved image quality and inspection accuracy while simplifying scanning process.

### BRIEF DESCRIPTION OF THE DRAWINGS

Embodiments will now be described by way of example only with reference to the accompanying drawings, in which:
**FIG. 1** shows a schematic sectional side view of a gas turbine engine;
**FIG. 2** is a schematic view of a scanning apparatus for scanning a component and a filter surrounding the component;
**FIG. 3** is a schematic view of an exemplary arrangement of the component and the filter;
**FIG. 4** is a greyscale plot of a scanned image of the arrangement of the component and the filter illustrated in FIG. 3;
**FIG. 5** is a sectional view of the component and the filter; and
**FIG. 6** is a flowchart of the method for scanning a component.

### DETAILED DESCRIPTION

Aspects and embodiments of the present invention will now be discussed with reference to the accompanying Figures. Further aspects and embodiments will be apparent to those skilled in the art.

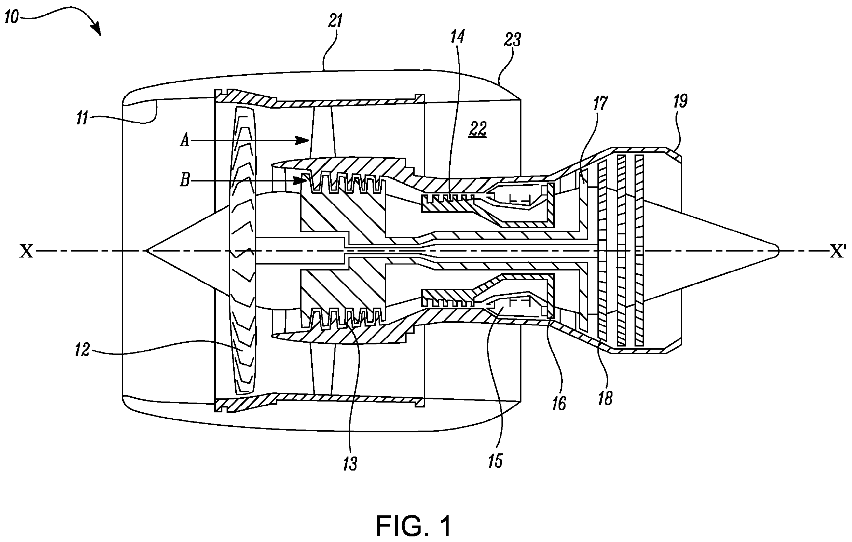

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

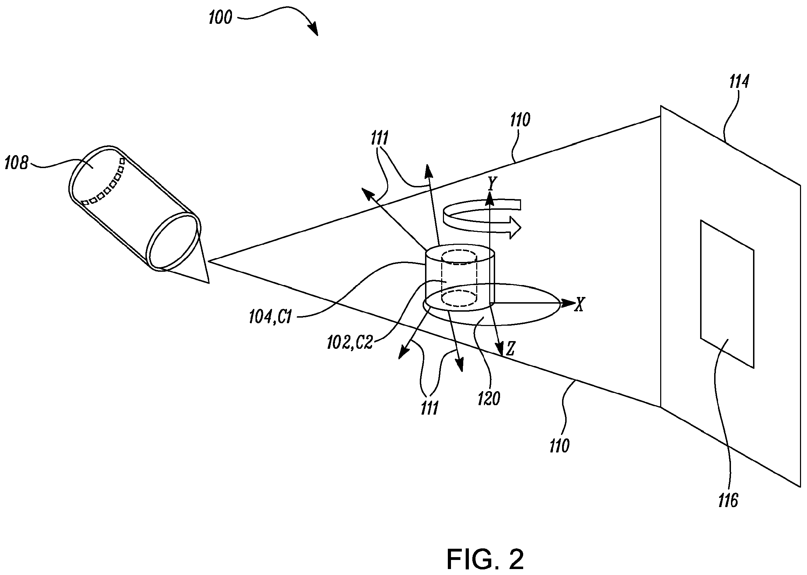

**FIG. 2** is a schematic view of a scanning apparatus 100 for scanning a component 102 and a filter 104 at least partially surrounding the component 102. In some embodiments, the component 102 is a part of the gas turbine engine 10 (shown in FIG. 1). In other embodiments, the component 102 is a part of another prime mover or a machine. In some embodiments, the component 102 is a turbine blade or a compressor blade of the gas turbine engine 10 (shown in FIG. 1). In some embodiments, the component 102 is metallic. The component 102 is shown schematically in FIG. 2 for the purpose of illustration. Other shapes and designs for the component 102 are foreseeable and could be used. In the illustrated embodiment of FIG. 1, only one component is shown. However, the scanning apparatus 100 may be used for scanning two or more components together.

The material of the filter 104 is a multi-phase material and it has an attenuation coefficient C1 that is lower than an attenuation coefficient C2 of a material of the component 102 to be scanned. In the illustrated embodiment of FIG. 2, the filter 104 completely surrounds the component 102. However, in some embodiments, the filter 104 is positioned adjacent to the component 102. In other words, the filter 104 may be disposed partially surrounding the component 102.

Further, the scanning apparatus 100 includes an imaging beam source 108 configured to generate an imaging beam 110 that passes through the component 102 and the filter 104. As the attenuation coefficient C1 of the material of the filter 104 is lower than the attenuation coefficient C2 of the material of the component, the filter 104 is configured to attenuate a scatter beam 111 that is produced upon irradiation of the component 102 with the imaging beam 110. The imaging beam attenuation achieved by the filter 104 is of an intermediate level rather than being too low or too high or being comparable to that of the component 104.

In some embodiments, the imaging beam source 108 is an electromagnetic source, such as an x-ray source or a gamma-ray source. The imaging beam source 108 is capable of emitting the imaging beam 110 in the electromagnetic spectrum that can penetrate or be transmitted through a material after attenuation. In some embodiments, the x-ray source is one of a reflective x-ray source or a transmissive x-ray source. In case of the imaging beam source 108 being an x-ray source, the imaging beam 110 is an energy beam within the x-ray region of electromagnetic (EM) spectrum. Alternatively, the imaging beam 110 may be an energy beam within any region in the EM spectrum that can penetrate or be transmitted through a material after attenuation.

Further, the scanning apparatus 100 includes an imaging beam receiver 114 configured to receive the imaging beam 110, such that the component 102 and the filter are disposed between the imaging beam source 108 and the imaging beam receiver 114. The imaging beam receiver 114 is configured to generate an image 116 in response to receiving the imaging beam 110. In some embodiments, the filter 104 increases rejection of the of scattered rays before the scatter beam 111 is received at the imaging beam receiver 114.

The scanning apparatus 100 further includes a support platform 120 configured to support the component 102 and the filter 104. In other words, the component 102 and the filter 104 are disposed on the support platform 120. The support platform 120 is configured to rotate and/or revolve relative to the imaging beam source 108 and the imaging beam receiver 114 about one or more axes and/or configured to translate relative to the imaging beam source 108 and the imaging beam receiver 114 to allow generation of the image 116.

The component 102 and the filter 104 are positioned on the support platform 120 in a configuration that reduces variation in material thickness penetrated at multiple positions or angles of movement of the support platform 120 relative to the imaging beam source 108 and the imaging beam receiver 114. This configuration may result in a high scan quality as the variation in combined material thickness to be penetrated is reduced for multiple projections. By introducing the filter 104, the variation in material path length may be reduced for multiple relative angles of rotation of the support platform 120. Accordingly, the variation in imaging beam attenuation across the filter 104 and component 102 may be reduced, leading to improved image contrast and quality. Moreover, averaging out the material thickness of the component 102 by placing the component 102 adjacent to the filter 104, may reduce artifacts caused by concave wall effect.

In some embodiments, the component 102 and the filter 104 are positioned on the support platform 120 in a configuration such that facing surfaces of the component 102 and the filter 104 are equally spaced across their full extent. With facing surfaces of the component 102 and the filter 104 equally or substantially equally spaced across their full extent, image quality of the component 102 may be improved. For example, the component 102 and the filter 104 are disposed on the support platform 120 such that if the component 102 and the filter 104 were to be interconnected, there would be no air gap at any point between the surfaces of the component 102 and the filter 104, or a minimal air gap. In other words, the component 102 and the filter 104 may be disposed so that their surfaces are in direct contact, or they may be separated by a border region, made from, for example, a polymer film. Further, in some embodiments, a resultant combined cross section of the filter 104 and the component 102 is circular or nearly circular or forms an annulus or near annulus.

In some embodiments, the filter 104 is a protective film or a sleeve. In some embodiments, the filter 104 is positioned on the support platform 120 offset from the one or more axes of rotation and/or revolution. Preferably, no part to be scanned of the filter 104 or no part to be scanned of the component 102 intersects the one or more axes of rotation and/or revolution.

By surrounding the component 102 by the filter 104 that has the lower attenuation coefficient than that of the component 102, the scanning apparatus 100 may facilitate reduction of the scatter that is usually caused by the material of the component 102. By reducing the scatter in the image 116, the scanning apparatus 100 may enable accurate scanning and clear surface detection of the component 102. Further, the low attenuation filter 104 may cause a cumulative x-ray attenuation lower than the component 102 but higher than the attenuation in a region prone to scatter. Hence, the scanning apparatus 100 may facilitate a clear identification and separation of the component 102 in the image 116. This may further improve image quality and inspection accuracy while simplifying the scanning process.

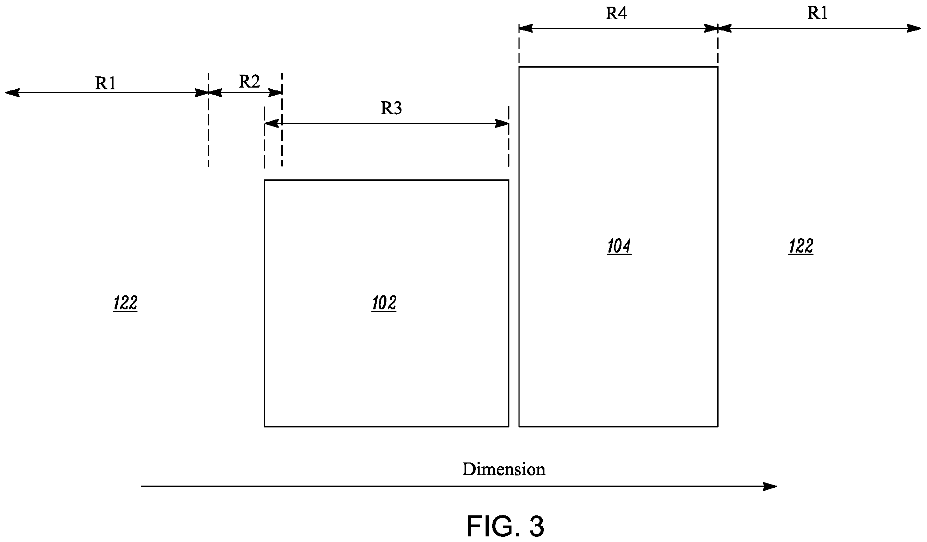

**FIG. 3** is a schematic view of an exemplary arrangement of the component 102 and the filter 104, in accordance with an embodiment of the present invention. In the illustrated embodiment of FIG. 3, the filter 104 is positioned adjacent to the component 102. In other words, one side of the component 102 is surrounded by the filter 104 and the other opposite side of the component 102 is surrounded by background 122.

It should be noted that in a scanned image of an object, region with most attenuation may appear bright, as this region attenuates or absorbs an imaging beam at a higher rate than other regions. Therefore, in a scanned image (not shown) of the exemplary arrangement shown in FIG. 3, the component 102 would appear brighter than the background 122 and the filter 104, as the component 102 attenuates or absorbs the imaging beam 110 (i.e., x-rays) at a higher rate than the background 122 and the filter 104. Accordingly, in the scanned image of this arrangement, a region (i.e., region R3) associated with the component 102 would appear brighter than a region (i.e., region R4) associated with the filter 104 and a region (i.e., region R1) associated with the background 122, respectively. In other words, the region R1 and the region R4 would appear darker than the region R3 in the scanned image. Moreover, a region (i.e., region R2) associated with scattering would appear darker than the region R3 but the brightness of the region R2 would vary between the brightness of the region R1 and the brightness of the region R4. Therefore, due to presence of scatter, it may be difficult to identify a surface or a wall of the component 102 on the side which is surrounded by the background 122 without the filter 104.

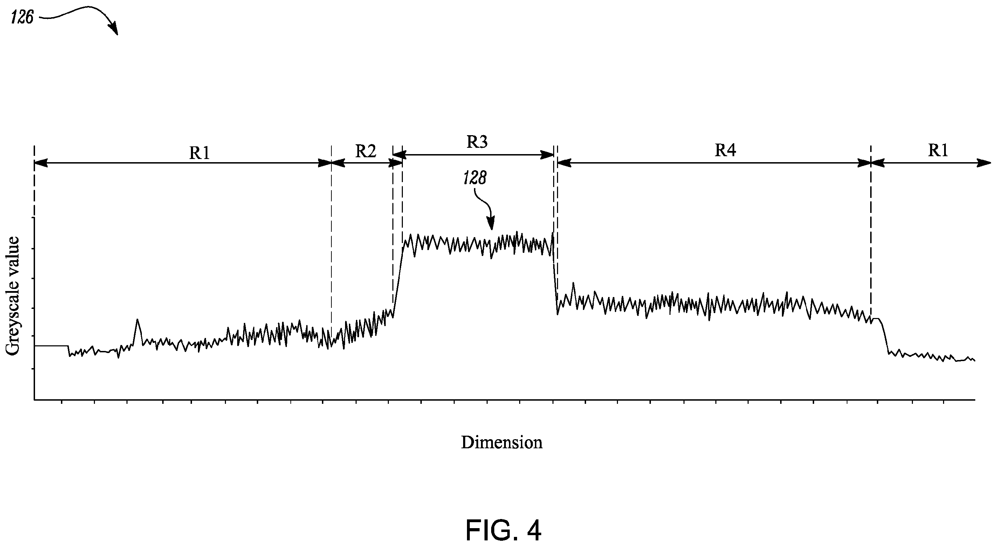

**FIG. 4** is a greyscale plot 126 of the scanned image (not shown) of the arrangement of the component 102 and the filter 104 illustrated in FIG. 3. The greyscale plot 126 shows a one-dimensional plot of the greyscale values along a dimension. The dimension is shown in the abscissa in arbitrary units and the greyscale values are shown in the ordinate in arbitrary units. Higher greyscale value denotes more shade of white.

The greyscale plot 126 depicts the greyscale values in various regions R1, R2, R3, R4 that are also illustrated in FIG. 3. The greyscale plot 126 shows a curve 128 traversing through the regions R1, R2, R3, R4.

Further, as the material of the filter 104 has the attenuation coefficient C1 that is lower than the attenuation coefficient C2 of the material of the component 102, the component 102 attenuates or absorbs the imaging beam 110 (i.e., x-rays) at a higher rate than the filter 104. Accordingly, the greyscale values in the region R3 are higher than the greyscale values in the region R4 and the greyscale values in the region R1. Further, the greyscale values in the region R4 are higher than the greyscale values in the region R1. Therefore, in the scanned image (not shown), the region R1 associated with the background 122 may appear darker as compared to the region R3 and the region R4.

Moreover, the greyscale values in the region R2 associated with scattering vary between the greyscale values in the region R1 associated with the background 122 and the greyscale values in the region R4 associated with the filter 104. Due to presence of such variable greyscale values in the region R2 associated with scattering, it may be difficult to identify a surface or a wall of the component 102 on the side which is surrounded by the background 122 without the filter 104. It is also evident from the greyscale plot 126 that the scattering is only present on the side of the component 102 which has no filter 104 adjacent thereto. On the other opposite side of the component 102, the presence of the filter 104 adjacent to the component 102 ensures minimal scattering of the imaging beam 110. Therefore, absence of the scatter enables a clear separation of the component 102 from the filter 104 and the background 122, by showing an instant dip in the greyscale values of the curve 128 in the transition zone.

This may facilitate an identifiable transition from the component 102 to the filter 104. In other words, by surrounding the component 102 with the filter 104, the intensity of the scatter may be eliminated, which may enable more accurate edge or surface detection of the component 102. In this way, a region of interest depicting the component 102, may be easily isolated or detected with the desirable accuracy based on attenuation of the imaging beam 110 (i.e., x-rays) on the greyscale plot 126.

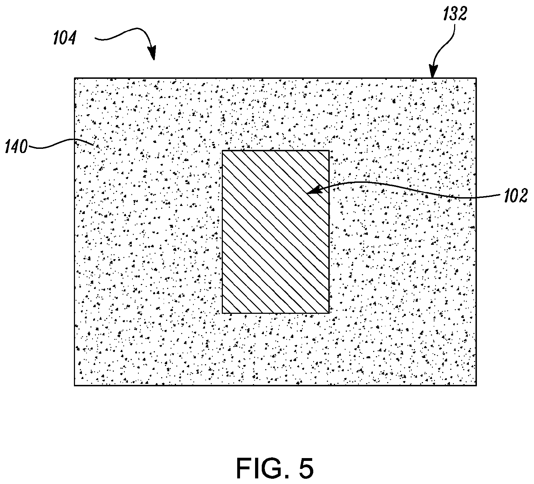

**FIG. 5** is a sectional view of another exemplary arrangement of the component 102 and a filter 104, in accordance with another embodiment of the present invention. The filter 104 has the same material properties as that of the filter 104 shown in FIG. 2. The material of the filter 104 is a multi-phase material 138. The multi-phase material 138 is stored in a pouch or a sealable container 132". The multi-phase material 138 may be flowable which enables the filter 104 to reach intricate and irregular shapes of the component 102, thereby ensuring precise placement of the filter 104 over the component 102. This may further improve surface detection and identification of the component 102 in the image 116 of the component 102. In some embodiments, the multi-phase material 138 is a particle suspension, a colloidal suspension, a polymer suspension, or a composite silicone putty. The multi-phase material 138 may be a liquid or a gas. In some examples, the multi-phase material 138 may be mercury or alloys such as Galinstan or solutions, emulsions etc.

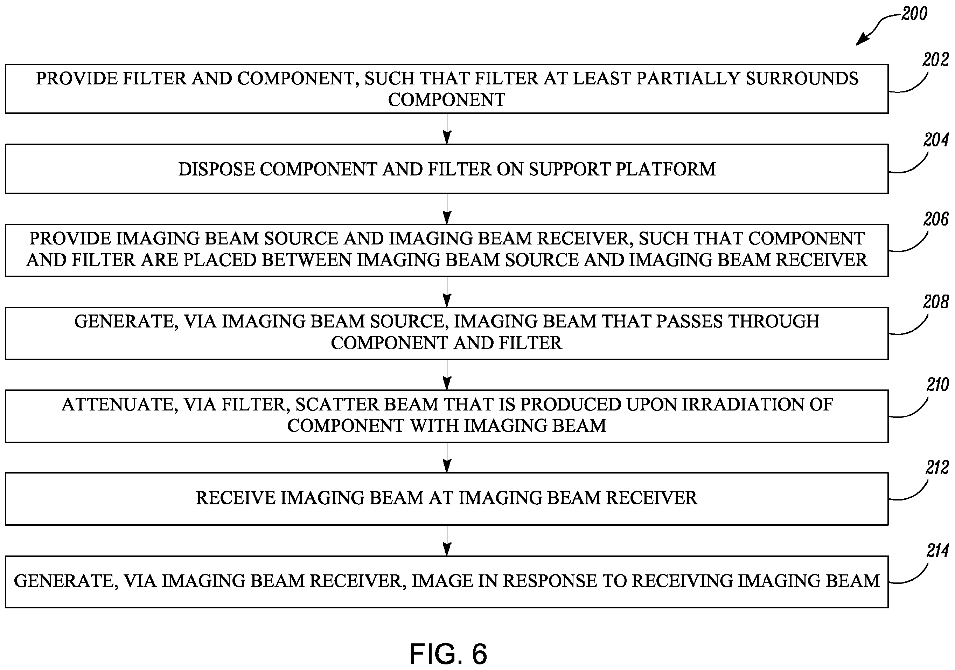

**FIG. 6** is a flowchart of a method 200 for scanning the component 102 shown in FIG. 2. The method 200 may be at least partly performed by the scanning apparatus 100 of FIG. 2. Referring to FIGS. 2 to 8, at step 202, the method 200 includes providing the filter 104 and the component 102, such that the filter 104 at least partially surrounds the component 102. The material of the filter 104 has the attenuation coefficient C1 that is lower than the attenuation coefficient C2 of the material of the component 102 to be scanned.

At step 204, the method 200 further includes disposing the component 102 and the filter 104 on the support platform 120. In some embodiments, disposing the component 102 and the filter 104 on the support platform 120 further includes positioning the component 102 and the filter 104 on the support platform 120 in a configuration that reduces variation in material thickness penetrated at multiple positions or angles of movement of the support platform 120 relative to the imaging beam source 108 and the imaging beam receiver 114. In some embodiments, disposing the component 102 and the filter 104 on the support platform 120 further includes positioning the component 102 and the filter 104 on the support platform 120 in a configuration such that facing surfaces of the component 102 and the filter 104 are equally spaced across their full extent.

At step 206, the method 200 further includes providing the imaging beam source 108 and the imaging beam receiver 114, such that the component 102 and the filter 104 are placed between the imaging beam source 108 and the imaging beam receiver 114. The support platform 120 is configured to rotate and/or revolve relative to the imaging beam source 108 and the imaging beam receiver 114 about one or more axes and/or configured to translate relative to the imaging beam source 108 and the imaging beam receiver 114. In some embodiments, the filter 104 is positioned on the support platform 120 offset from the one or more axes of rotation and/or revolution. Preferably, no part to be scanned of the filter 104 or no part to be scanned of the component 102 intersects the one or more axes of rotation and/or revolution.

At step 208, the method 200 further includes generating, via the imaging beam source 108, the imaging beam 110 that passes through the component 102 and the filter 104. At step 210, the method 200 further includes attenuating, via the filter 104, the scatter beam 111 that is produced upon irradiation of the component 102 with the imaging beam 110. In some embodiments, attenuating the scatter beam 111 further includes increasing the rejection of scattered rays before receiving the scatter beam 111 at the imaging beam receiver 114.

At step 212, the method 200 further includes receiving the imaging beam 110 at the imaging beam receiver 114. At step 214, the method 200 further includes generating, via the imaging beam receiver 114, the image 116 in response to receiving the imaging beam 110.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (200) for scanning a component (102), the method (200) comprising:
providing a filter (104) and the component (102), such that the filter (104) at least partially surrounds the component (102) and comprises a multi-phase material (140) that has an attenuation coefficient (C1) that is lower than an attenuation coefficient (C2) of a material of the component (102) to be scanned;
disposing the component (102) and the filter (104) on a support platform (120);
providing an imaging beam source (108) and an imaging beam receiver (114), such that the component (102) and the filter (104) are placed between the imaging beam source (108) and the imaging beam receiver (114), wherein the support platform (120) is configured to rotate and/or revolve relative to the imaging beam source (108) and the imaging beam receiver (114) about one or more axes and/or configured to translate relative to the imaging beam source (108) and the imaging beam receiver (114);
generating, via the imaging beam source (108), an imaging beam (110) that passes through the component (102) and the filter (104);
attenuating, via the filter (104), a scatter beam (111) that is produced upon irradiation of the component (102) with the imaging beam (110);
receiving the imaging beam (110) at the imaging beam receiver (114); and
generating, via the imaging beam receiver (114), an image (116) in response to receiving the imaging beam (110).

2. The method of claim 1, wherein the multi-phase material (140) is contained within a pouch or a sealable container (132).

3. The method of claim 1 or 2, wherein the multi-phase material (140) is a particle suspension, a colloidal suspension, a polymer suspension, or a composite silicone putty.

4. The method of any preceding claim, wherein the filter (104) completely surrounds the component (102).

5. The method of any preceding claim, wherein the filter (104) is positioned adjacent to the component (102).

6. The method of any preceding claim, wherein disposing the component (102) and the filter (104) on the support platform (120) further comprises positioning the component (102) and the filter (104) on the support platform (120) in a configuration that reduces variation in material thickness penetrated at multiple positions or angles of movement of the support platform (120) relative to the imaging beam source (108) and the imaging beam receiver (114).

7. The method of any one of claims 1 to 5, wherein disposing the component (102) and the filter (104) on the support platform (120) further comprises positioning the component (102) and the filter (104) on the support platform (120) in a configuration wherein facing surfaces of the component (102) and the filter (104) are equally spaced across their full extent.

8. The method of any preceding claim, wherein a resultant combined cross section of the filter (104) and the component (102) is circular or nearly circular or forms an annulus or near annulus.

9. The method of any preceding claim, wherein the filter (104) is a protective film or a sleeve.

10. The method of any preceding claim, wherein the filter (104) is positioned on the support platform (120) offset from the one or more axes of rotation and/or revolution, preferably wherein no part to be scanned of the filter (104) or no part to be scanned of the component (102) intersects the one or more axes of rotation and/or revolution.

11. The method of any preceding claim, wherein attenuating the scatter beam (111) further comprises increasing the rejection of scattered rays before receiving the scatter beam (111) at the imaging beam receiver (114).

12. The method of any preceding claim, wherein the imaging beam source (108) is an electromagnetic source.

13. The method of claim 12, wherein the imaging beam source (108) is a reflective x-ray source or a transmissive x-ray source.

14. The method of any preceding claim, wherein the component (102) is a turbine blade or a compressor blade of a gas turbine engine (10).

15. A combination of a scanning apparatus (100) for scanning a component (102) and a filter (104) at least partially surrounding the component (102), comprises a multi-phase material (140) that has an attenuation coefficient (C1) that is lower than an attenuation coefficient (C2) of a material of the component (102) to be scanned, the scanning apparatus (100) comprising:
an imaging beam source (108) configured to generate an imaging beam (110) that passes through the component (102) and the filter (104), wherein the filter (104) is configured to attenuate a scatter beam (111) that is produced upon irradiation of the component (102) with the imaging beam (110);
an imaging beam receiver (114) configured to receive the imaging beam (110), such that the component (102) and the filter (104) are disposed between the imaging beam source (108) and the imaging beam receiver (114), wherein the imaging beam receiver (114) is configured to generate an image (116) in response to receiving the imaging beam (110); and
a support platform (120) configured to support the component (102) and the filter (104), wherein the support platform (120) is configured to rotate and/or revolve relative to the imaging beam source (108) and the imaging beam receiver (114) about one or more axes and/or configured to translate relative to the imaging beam source (108) and the imaging beam receiver (114) to allow generation of the image (116).
